# EUROPÄISCHE PATENTSCHRIFT

(11) **EP 3 059 606 B1**
(45) Veröffentlichungstag und Bekanntmachung des Hinweises auf die Patenterteilung: **16.12.2020**
(21) Anmeldenummer: 16000300.0
(22) Anmeldetag: 05.02.2016
(51) Int. Cl.: G08G 1/16, B60W 30/00, G01S 7/03, G01S 13/93

(54) **VERFAHREN ZUR ERMITTLUNG EINER VERKEHRSDICHTEINFORMATION IN EINEM KRAFTFAHRZEUG UND KRAFTFAHRZEUG**
METHOD FOR DETERMINING TRAFFIC DENSITY INFORMATION IN A MOTOR VEHICLE AND MOTOR VEHICLE
PROCEDE DE DETERMINATION D'UNE INFORMATION DE DENSITE DE TRAFIC DANS UN VEHICULE AUTOMOBILE ET VEHICULE AUTOMOBILE

(30) Priorität: 18.02.2015 DE 102015002158
(43) Veröffentlichungstag der Anmeldung: 24.08.2016
(73) Patentinhaber: AUDI AG, 85045 Ingolstadt (DE)
(72) Erfinder: Khlifi, Rachid, DE - 85748 Garching (DE)
(74) Vertreter: Thielmann, Frank

(56) Entgegenhaltungen:
- DE-A1- 10 231 584
- DE-A1-102011 011 714
- DE-A1-102011 014 083
- DE-A1-102013 018 753
- DE-A1-102014 209 989

## Beschreibung

Die Erfindung betrifft ein Verfahren zur Ermittlung einer in einer Funktion eines Fahrzeugsystems zu berücksichtigenden, die Verkehrsdichte im Umfeld des Kraftfahrzeugs beschreibenden Verkehrsdichteinformation in einem Kraftfahrzeug. Daneben betrifft die Erfindung ein Kraftfahrzeug.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Bei heute bekannten Fahrzeugsystemen, insbesondere bei Fahrerassistenzsystemen, spielt die Situationsanalyse bei der Interpretation komplexer Verkehrsszenarien eine entscheidende Rolle bei der Auswertung von Maßnahmenkriterien, die die Auslösung einer Maßnahme bestimmen. Dabei sind verschiedenste Maßnahmen bekannt, beispielsweise die Ausgabe einer Information, insbesondere einer Warnung, an einen Fahrer, ein Fahreingriff und/oder die Anpassung von Betriebsparametern wenigstens eines Fahrzeugsystems. Dabei ist es bekannt, im Rahmen der Fahrsituationsanalyse bestimmte, im Umfeld des Kraftfahrzeugs detektierte Objekte nachzuverfolgen und auf ihre Kritikalität zu bewerten, insbesondere im Hinblick auf die Bestimmung von Parametern einer möglichen Kollision, beispielsweise einer Kollisionswahrscheinlichkeit. Die Interpretationskomplexität der Verkehrssituation steigt auf dicht befahrenen Straßen mit der Anzahl der Objekte im gesamten Umfeld des Kraftfahrzeugs an.

Mit steigender Komplexität in dicht befahrenen Straßen kann es zu Fehlinterpretationen der Verkehrsszenarien kommen, so dass beispielsweise Falsch- und Fehlwarnungen auftreten können. Dies senkt die Akzeptanz von Fahrerassistenzsystemen. Ein weiteres Problem liegt darin, dass der Betrieb des Kraftfahrzeugs in dichtem Verkehr auch für den Fahrer eine Belastung darstellt, die durch heutige Fahrzeugsysteme nicht hinreichend gewürdigt wird.

DE 10 2011 014 083 A1 offenbart ein Verfahren zum Betreiben eines Fahrerassistenzsystems eines Kraftfahrzeugs, wobei zumindest ein eine Verkehrsdichte in einem Bereich einer Umgebung des Kraftfahrzeugs kennzeichnender Parameter und ein Grad der Verkehrsdichte basierend auf dem zumindest einen ermittelten Parameter ermittelt werden. Ein Sensor in Form eines Radarsensors wird verwendet, wobei mittels von dem Sensor ermittelter Messdaten Kraftfahrzeuge erfasst sowie deren Geschwindigkeiten relativ zu dem Kraftfahrzeug ermittelt werden. Aus diesen Parametern kann der Grad der Verkehrsdichte in einem Bereich einer Umgebung des Kraftfahrzeugs ermittelt werden.

DE 10 2013 018 753 A1 betrifft eine Radarsensoranordnung zur Umgebungsüberwachung für ein Fahrzeug, wobei wenigstens einer der Radarsensoren ein Radarsensor in CMOS-Technologie ist. Die Radarsensoren sind durch eine Ansteuer-Einrichtung individuell ansteuerbar, so dass verschiedene Erfassungsbereiche mit unterschiedlich ausgeprägten Redundanzbereichen realisierbar sind. Dadurch sollen unterschiedliche Ausleuchtprofile im Raum auswertbar sein, die für unterschiedliche Assistenzsysteme verwendbar sind.

DE 10 2011 011 714 A1 betrifft ein Verfahren zur Unterstützung eines Fahrers eines Fahrzeugs. Ein Aktivierungsschwellwert für einen Fahreingriff eines Fahrerassistenzsystems wird in Abhängigkeit von einer erfassten Fahrerbelastung bzw. eines erfassten Fahrerzustands adaptiert.

DE 102 31 584 A1 offenbart ein Verfahren zum selbstständigen Auslösen einer Verzögerung eines Fahrzeugs zur Verhinderung eines Zusammenstoßes oder einer Verminderung der Folgen eines bevorstehenden Zusammenstoßes, indem eine oder mehrere Größen, die eine Kollisionsgefährdung mit einem weiteren Objekt repräsentieren, in einem vorgegebenen Auslösebereich liegen müssen. Objekte, die sich quer zur Fahrtrichtung des Fahrzeugs bewegen oder die sich zur eigenen Bewegungsrichtung entgegengesetzt bewegen oder die von Beginn ihrer Erfassung an durch eine Umfelderfassung als stehende Objekte erkannt werden, werden nicht in die Ermittlung einer Kollisionswahrscheinlichkeit einbezogen.

DE 10 2014 209 989 A1 offenbart ein Bordgerät zur Verkehrsdichteeinschätzung. Mittels eines Objekterkennungssystems werden Fahrzeuge erfasst, danach Spuren zugeordnet und alsdann gezählt und gemeinsam mit ihren Abstanden betrachtet.

Der Erfindung liegt daher die Aufgabe zugrunde, eine verbesserte Informationsgrundlage für Funktionen in Fahrzeugsystemen zu schaffen.

Zur Lösung dieser Aufgabe sind bei einem Verfahren der eingangs genannten Art erfindungsgemäß die Merkmale des Anspruchs 1 vorgesehen.

Die Erfindung nutzt also die Verfügbarkeit neuer, moderner Radartechnologien aus, die es erlauben, die Umgebung des Kraftfahrzeugs auch in komplexen Verkehrssituationen hochgenau derart abzubilden, dass die einzelnen statischen, also unbewegten, und dynamischen, also andere Verkehrsteilnehmer abbildenden, Objekte voneinander unterschieden, identifiziert und klassifiziert werden können. Werden diese Objekte in eine Umfeldkarte eingetragen, kann aus der Verteilung der dynamischen Objekte auf die Verkehrsdichte im Umfeld des Kraftfahrzeugs rückgeschlossen werden. Es wird mithin vorgeschlagen, mittels moderner, auf Halbleitertechnologie basierender Radarsensorik die Verkehrsdichte kontinuierlich zu überwachen, um eine Verkehrsdichteinformation zu ermitteln, die dann in den Funktionen, beispielsweise im Rahmen von Maßnahmenkriterien, entsprechend bewertet werden kann. Beispielsweise können bei einer eine erhöhte Verkehrsdichte anzeigenden Verkehrsdichteinformation Maßnahmenkriterien bzw. durch die Maßnahmenkriterium bewertete Auswertungsgrößen derart angepasst werden, dass eine frühzeitigere Warnung beziehungsweise Information des Fahrers erfolgt, da berücksichtigt wird, dass dieser ebenso durch die komplexe Verkehrssituation belastet ist. Insbesondere kann die Verkehrsdichteinformation also genutzt werden, um die Aufmerksamkeit des Fahrers in verkehrsdichteren Straßen zu steigern.

Die Verwendung hochauflösender Radarsensoren hat eine bessere Trennfähigkeit mehrerer Objekte im Umfeld des Kraftfahrzeugs zur Folge, wobei insbesondere eine Separierung in Abstand, Geschwindigkeit sowie Winkeln, insbesondere Winkeln in Azimut und Elevation, vorgenommen werden kann. Durch diese feine Auflösung kann die Verkehrsdichte in einem Multiobjektszenario genauer ermittelt und bewertet werden.

Konkret kann beispielsweise vorgesehen sein, dass zur Ermittlung der Umfeldkarte wenigstens ein Reflektionspunkte zu zusammengehörenden Objekten zuordnender Assoziierungsalgorithmus und/oder ein ein Objekt als dynamisch oder statisch klassifizierender Klassifizierungsalgorithmus verwendet wird. Mithin können durch Assoziationsalgorithmen die Reflektionen eines anderen Objekts, insbesondere eines anderen Verkehrsteilnehmers, zusammengefasst werden, was bevorzugt bereits in dem wenigstens einen Radarsensor geschehen kann, welcher beispielsweise als Radardaten eine Objektliste liefern kann, die alle entsprechenden Messdaten, konkret Abstand, Geschwindigkeit und Winkel, enthält. Auch Klassifizierungsalgorithmen können bereits seitens des wenigstens einen Radarsensors vorgesehen sein, so dass zwischen dynamischen und statischen Zielen unterschieden werden kann. Sind die Objekte erst zusammengefasst und klassifiziert, kann durch die Fusion aller detektierten Objekte im Umfeld des Kraftfahrzeugs eine Umfeldkarte erstellt werden, die für die Ermittlung der Verkehrsdichteinformation herangezogen wird. Es sei darauf hingewiesen, dass es selbstverständlich auch denkbar ist, die Assoziierungsalgorithmen und/oder die Klassifizierungsalgorithmen extern zu den Radarsensoren zu verorten, beispielsweise für wenigstens einen und/oder alle Radarsensoren gemeinsam in einem Steuergerät und/oder einer Steuereinheit des Kraftfahrzeugs.

Als Verkehrsdichteinformation wird eine lokale Verkehrsdichteinformation, insbesondere zusätzlich auch eine das gesamte Umfeld betreffende globale Verkehrsdichteinformation, ermittelt. Es ist mithin eine allgemeine, auf das gesamte erfasste Umfeld des Kraftfahrzeugs bezogene Aussage über die Verkehrsdichte möglich, insbesondere durch Ermittlung einer gemittelten Verkehrsdichte für das gesamte Umfeld oder eine vergleichbare Größe. Die vorliegende Erfindung sieht jedoch in jedem Fall vor, dass eine lokale Verkehrsdichteinformation ermittelt wird, die Aussagen darüber enthält, wo die größte Häufung dynamischer Objekte vorliegt, mithin Verkehrs-Hotspots im Umfeld des Kraftfahrzeugs befindlich sind.

Konkret sieht die vorliegende Erfindung vor, dass als lokale Verkehrsdichteinformation die Lage wenigstens eines Häufungsbereichs dynamischer Objekte, in dem ein Schwellwert für die Dichte dynamischer Objekte überschritten ist, ermittelt wird. Damit ist eine konkrete Möglichkeit zur räumlichen Lokalisierung von Verkehrs-Hotspots im Umfeld des Kraftfahrzeugs gegeben, so dass die entsprechende lokale Verkehrsdichteinformation gezielt eine Aussage über den wenigstens einen Ort dichteren Verkehrs im Umfeld des Kraftfahrzeugs enthält. Werden derartige Häufungsbereiche festgestellt, kann beispielsweise ein diese lokale Verkehrsdichteinformation auswertendes Maßnahmenkriterium im Rahmen der wenigstens einen Funktion verwendet werden, bei dessen Erfüllung ein die Aufmerksamkeit des Fahrers auf den Häufungsbereich lenkender Hinweis als Maßnahme ausgegeben wird. In dieser besonders vorteilhaften Ausgestaltung kann also die Aufmerksamkeit des Fahrers gezielt auf Verkehrs-Hotspots in seinem Umfeld gerichtet werden, da von diesen häufig auch ein höheres Gefährdungspotential für das eigene Kraftfahrzeug ausgeht. Mithin kann dem Fahrer in komplexen Verkehrssituationen eine hervorragende Orientierungshilfe gegeben werden. Es ist jedoch auch eine anderweitige Nutzung lokaler Verkehrsdichteinformationen denkbar, insbesondere auch im Rahmen der Anpassung von Maßnahmenkriterien im Rahmen der wenigstens einen Funktion, nachdem beispielsweise bei einer bestimmten Anzahl und/oder Größe von Verkehrs-Hotspots, also Häufungsbereichen, von einer komplexeren Verkehrssituation ausgegangen werden kann und entsprechende Maßnahmenkriterien und/oder die Bestimmung von Auswertungsgrößen so umparametriert werden können, dass eine frühzeitigere Warnung und/oder allgemein frühere Durchführung von Maßnahmen ermöglicht wird.

Mithin ist es auch allgemein zweckmäßig, wenn in Abhängigkeit der (globalen und/oder lokalen) Verkehrsdichteinformation wenigstens ein die Durchführung einer Maßnahme im Rahmen der Funktion betreffendes Maßnahmenkriterium, insbesondere ein in dem Maßnahmenkriterium verwendeter Schwellwert, angepasst wird. Beispielsweise können Schwellwerte in Maßnahmenkriterien mit höherer angezeigter Verkehrsdichte zur frühzeitigeren Durchführung der Maßnahme angepasst werden, wobei sich bei der Maßnahme insbesondere um eine Informationsausgabe an den Fahrer, bevorzugt eine Warnung des Fahrers, handelt.

Eine besonders vorteilhafte Ausgestaltung der vorliegenden Erfindung bezieht sich auf ein die Aufmerksamkeit des Fahrers, insbesondere dessen Müdigkeit, überwachendes Fahrerassistenzsystem als Fahrzeugsystem. In diesem Kontext kann vorgesehen sein, dass eine Schwellwert zur Ausgabe einer Warninformation an den Fahrer mit höhere Verkehrsdichten anzeigenden Verkehrsdichteinformationen abgesenkt und/oder eine mit dem Schwellwert zu vergleichende Müdigkeitsgröße mit höhere Verkehrsdichten anzeigenden Verkehrsdichteinformationen erhöht wird. Im Rahmen der vorliegenden Erfindung wurde mithin erkannt, dass das Fahren in verkehrsdichten Bereichen den Fahrer stärker belastet, mithin schneller zu Müdigkeit beim Fahrer führen kann. Mithin wird vorgeschlagen, durch die Algorithmen der Müdigkeitserkennung die Verkehrsdichteinformation als Parameter für die Müdigkeitsabschätzung des Fahrers nutzen. Fährt der Fahrer über längere Zeit in einer verkehrsdichteren Straße, ist er durch die hohe Beanspruchung schneller ermüdet, was entsprechend durch frühere Warnungen Berücksichtigung findet.

In einer konkreten Ausgestaltung in diesem Kontext kann vorgesehen sein, dass ein akkumulierter, die Belastung des Fahrers für die aktuelle Fahrt und/oder einen seit der letzten Pause durchgeführten Fahrtabschnitt beschreibender Belastungswert aus dem zeitlichen Verlauf der insbesondere globalen Verkehrsdichteinformation abgeleitet wird, wobei mit steigendem Belastungswert der Warnschwellwert abgesenkt und/oder die Müdigkeitsgröße erhöht wird. Die höhere Belastung des Fahrers durch den Betrieb des Kraftfahrzeugs in hohen Verkehrsdichten wird mithin dadurch abgebildet, dass dieser zu einem früheren Zeitpunkt auf seine nachlassende Aufmerksamkeit bzw. eintretende Müdigkeit aufmerksam gemacht wird. Es sei angemerkt, dass es selbstverständlich auch denkbar ist, den Parameter der Verkehrsdichteinformation anderweitig in die Aufmerksamkeitserkennung bzw. Müdigkeitserkennung eingehen zu lassen.

Eine weitere nützliche Anwendung findet die Verkehrsdichteinformation, allgemein gesprochen, in allen Funktionen von Fahrzeugsystemen, die eine Fahrsituationsanalyse durchführen, so dass es zweckmäßig ist, wenn die Verkehrsdichteinformation bei wenigstens einer im Rahmen der wenigstens einen Funktion durchgeführten Fahrsituationsanalyse berücksichtigt wird. Diese kann mithin durch die Zusatzinformation über die Verkehrsdichte im Umfeld des Kraftfahrzeugs verbessert werden, insbesondere auch bei allgemeinen Risikoabschätzungen für Teilbereich des Umfelds und dergleichen.

In einer besonders vorteilhaften Ausgestaltung der vorliegenden Erfindung ist vorgesehen, dass mehrere, das Umfeld des Kraftfahrzeugs in einem vollständigen 360°-Winkelbereich abdeckende Radarsensoren verwendet werden und/oder die Radarsensoren eine Reichweite von wenigstens 30 m aufweisen und/oder zur Erfassung von Winkeln in zwei zueinander senkrechten Ebenen und/oder als Weitwinkel-Radarsensoren ausgebildet sind. Werden Weitwinkel-Radarsensoren verwendet, lassen sich komplette Abdeckungen des Umfelds, was den Winkelbereich angeht, bereits mit wenigen Radarsensoren erreichen, beispielsweise acht Radarsensoren, von denen dann drei im vorderen Stoßfänger des Kraftfahrzeugs, drei im hinteren Stoßfänger des Kraftfahrzeugs und zwei seitlich, insbesondere in Türen des Kraftfahrzeugs, integriert werden können. Durch die kleinbauende Realisierung aufgrund der Halbleitertechnologie lässt sich eine bauraumsparende Integration ermöglichen, wobei im Bereich der Integration in Türen vorgesehen sein kann, radardurchlässige Fenster im Türblech vorzusehen, die dann überlackiert werden können und von außen nicht erkennbar sind. Um Winkel in zwei zueinander senkrechten Ebenen, beispielsweise einen Azimutwinkel und einen Elevationswinkel, erfassen zu können, sind im Stand der Technik bereits entsprechende Ausgestaltungen der Antennenanordnungen von Radarsensoren bekannt, die auch im Rahmen der vorliegenden Erfindung vorteilhaft eingesetzt werden können, da dann eine komplette Lage von Objekten im Umfeld des Kraftfahrzeugs bestimmt werden kann. Auch in Halbleitertechnologie realisierte Radarsensoren können dabei einen großen Erfassungsbereich hinsichtlich ihrer Reichweite abdecken, beispielsweise von 0,3 m bis hin zu wenigstens 30 m, beispielsweise 50 m, wobei letzteres durch die Verwendung externer Mikrostreifen-Patchantennen unterstützt wird. In der horizontalen Ebene können zweckmäßigerweise Weitwinkel-Radarsensoren verwendet werden, die einen Winkelbereich von wenigstens 120°, bevorzugt wenigstens 150°, beispielsweise 160°, abdecken.

In konkreter Ausgestaltung der vorliegenden Erfindung kann vorgesehen sein, dass als Radarsensor ein einen den Radartransceiver realisierenden Halbleiterchip, insbesondere CMOS-Chip, aufweisender Radarsensor verwendet wird. Eine weitere Hochintegration lässt sich, wie eingangs bereits beschrieben wurde, dadurch erreichen, dass durch den Halbleiterchip auch eine digitale Signalverarbeitungskomponente des Radarsensors und/oder eine Steuereinheit des Radarsensors realisiert werden. Werden zusätzlich auch der Halbleiterchip und eine Antennenanordnung des Radarsensors als ein Package realisiert, sind äußerst kleine Radarsensoren, beispielsweise kleiner als 3 cm x 3 cm, denkbar, mit denen hervorragende Signal-Zu-Rausch-Verhältnisse und hervorragende Ortsauflösungen erreichbar sind.

Insbesondere ermöglicht es die Halbleitertechnologie, insbesondere die beschriebene CMOS-Technologie, bei den gewünschten Reichweiten, insbesondere bis zu 50 m, hohe Frequenzbereiche und Frequenzbandbreiten zu nutzen. So sieht eine besonders vorteilhafte Ausgestaltung der vorliegenden Erfindung vor, dass der Radarsensor in einem Frequenzbereich von 77 - 81 GHz und/oder mit einer Frequenzbandbreite von wenigstens 1 GHz, insbesondere von 4 GHz, betrieben wird. Durch eine insbesondere einstellbare höhere Frequenzbandbreite kann eine hervorragende Abstandstrennfähigkeit im Erfassungsbereich ermöglicht werden, beispielsweise im Bereich von 5 cm mit 4 GHz Frequenzbandbreite oder 15 cm mit 1 GHz Frequenzbandbreite.

Neben dem Verfahren betrifft die Erfindung auch ein Kraftfahrzeug, aufweisend wenigstens einen Radarsensor und ein zur Durchführung des erfindungsgemäßen Verfahrens ausgebildetes Steuergerät. Bei dem Steuergerät kann es sich beispielsweise um ein Steuergerät eines sogenannten zentralen Fahrerassistenzsystems handeln, welches die Sensordaten verschiedener Sensoren, insbesondere auch neben den Radarsensoren, sammelt, um die Sensordaten für die verschiedenen Funktionen von unterschiedlichen Fahrzeugsystemen aufzubereiten. In diesem Rahmen kann auch die Ermittlung der Verkehrsdichteinformation geschehen. Sämtliche Ausführungen bezüglich des erfindungsgemäßen Verfahrens lassen sich analog auf das erfindungsgemäße Kraftfahrzeug übertragen, mit welchem mithin auch die genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: einen in dem Kraftfahrzeug verwendeten Radarsensor, und
- Fig. 3: eine Skizze zur Erläuterung der Ermittlung der Verkehrsdichteinformation.

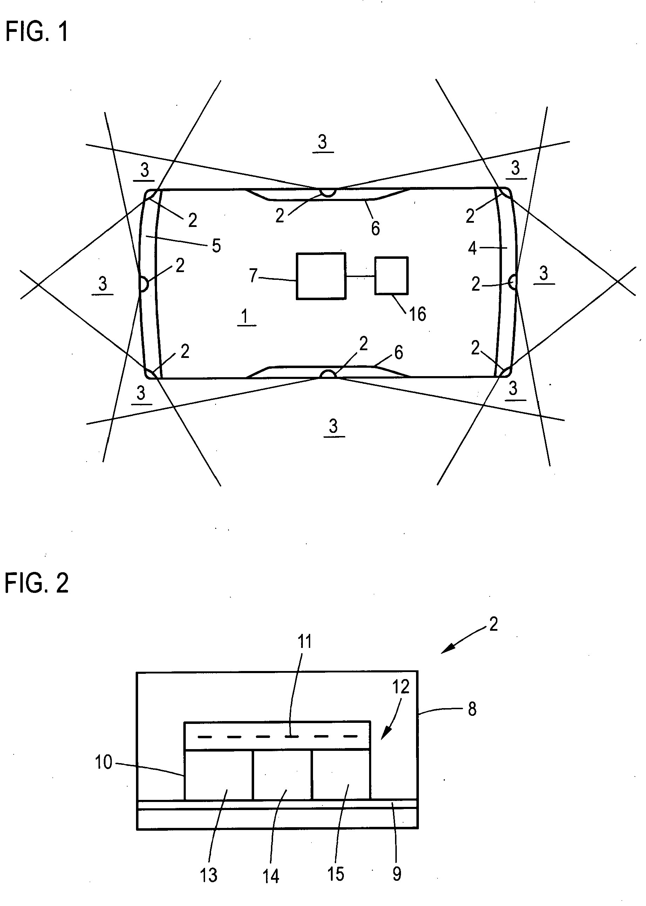

Fig. 1 zeigt eine Prinzipskizze eines erfindungsgemäßen Kraftfahrzeugs 1. Dieses weist vorliegend acht Radarsensoren 2 auf, die als Weitwinkel-Radarsensoren ausgebildet sind und, wie anhand der angedeuteten Erfassungsbereiche 3 ersichtlich ist, eine 360°-Erfassung des Umfelds des Kraftfahrzeugs erlauben. Die Radarsensoren 2 weisen eine Reichweite von 50 m auf, und basieren auf CMOS-Technologie, so dass sie äußerst kleinbauend realisiert sind, beispielsweise kleiner als 3 cm x 3 cm. Dies ermöglicht es, dass sie im vorderen bzw. hinteren Stoßfänger 4, 5 des Kraftfahrzeug 1 verbaut werden können und auch ein Verbau in seitlichen Türen 6 möglich ist, wenn beispielsweise ein radardurchlässiges Fenster im Türblech vorgesehen wird.

Die Radardaten der Radarsensoren 2 werden in einem Steuergerät 7 ausgewertet, welches auch zur Durchführung des erfindungsgemäßen Verfahrens ausgebildet ist. Durch das Steuergerät 7 und/oder andere Steuergeräte können auch Funktionen von Fahrzeugsystemen ausgeführt werden, die die im Rahmen des erfindungsgemäßen Verfahrens ermittelte Verkehrsdichteinformation nutzen.

Fig. 2 zeigt in Form einer Prinzipskizze den Aufbau der Radarsensoren 2 genauer. Ein Radarsensor 2 weist ein Gehäuse 8 auf, in dem eine Leiterplatte 9 gehaltert ist, auf der ein Halbleiterchip 10, hier ein CMOS-Chip, angeordnet ist. Der Halbleiterchip 10 ist gemeinsam mit einer Antennenanordnung 11 des Radarsensors 2 als ein Package 12 realisiert, wobei die Antennenanordnung 11 so ausgestaltet ist, dass Winkel zu einem reflektierenden Punkt in zwei zueinander senkrechten Ebenen erfasst werden können. Durch den Halbleiterchip 10 werden vorliegend neben dem Radartransceiver 13 auch eine digitale Signalverarbeitungskomponente 14 (DSP) und eine Steuereinheit 15 des Radarsensors 2 realisiert.

Die Radarsensoren 2 werden in einem Frequenzbereich von 77 - 81 GHz bei einer Frequenzbandbreite von 4 GHz betrieben, um hochauflösend das Umfeld des Kraftfahrzeugs 1 beschreibende Radardaten liefern zu können.

Im Steuergerät 7 wird aus den Radardaten nun eine Umfeldkarte ermittelt, die die Positionen der statischen und dynamischen Objekte im Umfeld des Kraftfahrzeugs 1 enthält. Zweckmäßigerweise werden die Radardaten seitens der Radarsensoren bereits vorausgewertet, indem einzelne vermessene Punkte durch Assoziierungsalgorithmen zu zusammengehörenden Objekten zusammengefasst werden und diese Objekte durch Klassifizierungsalgorithmen als dynamisch oder statisch klassifiziert werden. Die entstehenden Objektlisten werden als Radardaten an das Steuergerät 7 übertragen, wo eine Fusion der Radardaten der einzelnen Radarsensoren 2 stattfindet, so dass die Umfeldkarte entsteht. Durch Auswertung der enthaltenen Positionen der dynamischen Objekte, die andere Verkehrsteilnehmer darstellen, können globale und lokale Verkehrsdichteinformationen abgeleitet werden.

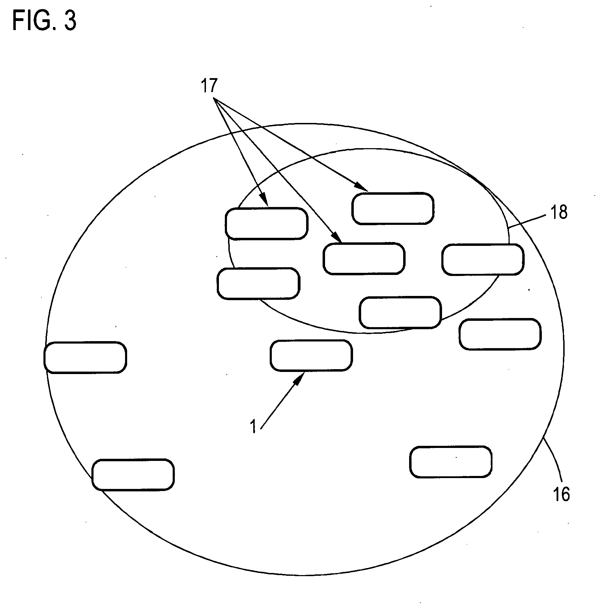

Dies sei im Hinblick auf Fig. 3 näher erläutert. Diese zeigt das Kraftfahrzeug 1 sowie den akkumulierten Erfassungsbereich 16 der Radarsensoren 2, der sich durch deren Reichweite, hier 50 m, bestimmt. Ersichtlich werden innerhalb des akkumulierten Erfassungsbereichs mehrere dynamische Objekte 17, hier weitere Verkehrsteilnehmer, durch die Radarsensoren 2 erfasst. In der Umfeldkarte sind diese dynamischen Objekte 17 mit ihren Positionen enthalten. Durch Analyse dieser Positionen kann eine allgemein Verkehrsdichte für das erfasste Umfeld als globale Verkehrsdichteinformation bestimmt werden, es ist jedoch auch denkbar, lokale Verkehrshotspots, hier beispielsweise den Häufungsbereich 18, festzustellen und zu lokalisieren, wenn beispielsweise eine die Aufmerksamkeit des Fahrers auf den Häufungsbereich 18 als Verkehrshotspot lenkende Information ausgegeben werden soll.

Die mittels des erfindungsgemäßen Verfahrens bestimmbaren Verkehrsdichteinformationen können auf verschiedenste Art und Weise in Fahrsituationsanalysen und/oder zur Anpassung von Maßnahmenkriterien für unterschiedliche Funktionen von Fahrzeugsystemen eingesetzt werden. Eine besonders vorteilhafte Anwendung ist die in einem die Aufmerksamkeit des Fahrers, insbesondere dessen Müdigkeit, überwachenden Fahrerassistenzsystem. Davon ausgehend, dass eine höhere Verkehrsdichte den Fahrer mehr beansprucht, kann mithin eine eine höhere Verkehrsdichte anzeigende Verkehrsdichteinformation zu einer höheren Müdigkeitsgröße führen, so dass mithin zu einem früheren Zeitpunkt eine Warnung ausgegeben wird. Während in diesem Fall eine Akkumulation der Verkehrsdichteinformation bereits in der Müdigkeitsgröße für die aktuelle Fahrt bzw. den seit der letzten Pause stattfindenden aktuellen Fahrtabschnitt geschieht, kann es auch zweckmäßig sein, aus dem zeitlichen Verlauf der Verkehrsdichteinformation für die aktuelle Fahrt und/oder den seit der letzten Pause durchgeführten Fahrtabschnitt einen Belastungswert abzuleiten, der beispielsweise (neben einer Berücksichtigung bei der Ermittlung einer Müdigkeitsgröße - auch zur Anpassung eines Maßnahmenkriteriums zur Ausgabe einer Warninformation genutzt werden kann. So kann ein darin verwendeter Schwellwert mit steigendem Belastungswert abgesenkt werden, so dass auch hier ein früherer Warnzeitpunkt erreicht wird.

## Patentansprüche

1. Verfahren zur Ermittlung einer in einer Funktion eines Fahrzeugsystems zu berücksichtigenden, die Verkehrsdichte im Umfeld des Kraftfahrzeugs (1) beschreibenden Verkehrsdichteinformation in einem Kraftfahrzeug (1), wobei mittels wenigstens eines auf das Umfeld des Kraftfahrzeugs (1) gerichteten Radarsensors (2) Objekte (17) im Umfeld des Kraftfahrzeugs (2) beschreibende Radardaten aufgenommen werden,
**dadurch gekennzeichnet,**
**dass** ein auf Halbleitertechnologie basierender Radarsensor (2) verwendet wird, wobei durch Auswertung der Radardaten eine die in statische und dynamische Objekte (17) klassifizierten, detektierten Objekte (17) enthaltende Umfeldkarte ermittelt wird und eine lokale Verkehrsdichteinformation aus wenigstens einem Teil der in der Umfeldkarte enthaltenen Positionen dynamischer Objekte (17) ermittelt wird, wobei als lokale Verkehrsdichteinformation die Lage wenigstens eines Häufungsbereichs (18) dynamischer Objekte (17), in dem ein Schwellwert für die Dichte dynamischer Objekte (17) überschritten ist, ermittelt wird.

2. Verfahren nach Anspruch 1,
**dadurch gekennzeichnet,**
**dass** zur Ermittlung der Umfeldkarte wenigstens ein Reflektionspunkte zu zusammengehörenden Objekten (17) zuordnender Assoziierungsalgorithmus und/oder ein ein Objekt (17) als dynamisch oder statisch klassifizierender Klassifizierungsalgorithmus verwendet wird.

3. Verfahren nach Anspruch 1 oder 2,
**dadurch gekennzeichnet,**
**dass** zusätzlich eine das gesamte Umfeld betreffende globale Verkehrsdichteinformation ermittelt wird.

4. Verfahren nach einem der vorangehenden Ansprüche,
**dadurch gekennzeichnet,**
**dass** in Abhängigkeit der Verkehrsdichteinformation wenigstens ein die Durchführung einer Maßnahme im Rahmen der Funktion betreffendes Maßnahmenkriterium, insbesondere ein in dem Maßnahmenkriterium verwendeter Schwellwert, angepasst wird.

5. Verfahren nach einem der vorangehenden Ansprüche,
**dadurch gekennzeichnet,**
**dass** bei einem die Aufmerksamkeit des Fahrers, insbesondere dessen Müdigkeit, überwachenden Fahrerassistenzsystem als Fahrzeugsystem eine Warnschwelle zur Ausgabe einer Warninformation an den Fahrer mit höhere Verkehrsdichten anzeigenden Verkehrsdichteinformationen abgesenkt und/oder eine mit dem Schwellwert zu vergleichende Müdigkeitsgröße mit höhere Verkehrsdichten anzeigenden Verkehrsdichteinformationen erhöht wird.

6. Verfahren nach Anspruch 5,
**dadurch gekennzeichnet,**
**dass** ein akkumulierter, die Belastung des Fahrers für die aktuelle Fahrt und/oder einen seit der letzten Pause durchgeführten Fahrtabschnitt beschreibender Belastungswert aus dem zeitlichen Verlauf der Verkehrsdichteinformation abgeleitet wird, wobei mit steigendem Belastungswert die Warnschwelle abgesenkt und/oder die Müdigkeitsgröße erhöht wird.

7. Verfahren nach einem der vorangehenden Ansprüche,
**dadurch gekennzeichnet,**
**dass** die Verkehrsdichteinformation bei wenigstens einer im Rahmen der Funktion durchgeführten Fahrsituationsanalyse berücksichtigt wird.

8. Verfahren nach einem der vorangehenden Ansprüche,
**dadurch gekennzeichnet,**
**dass** mehrere, das Umfeld des Kraftfahrzeugs (1) in einem vollständigen 360°-Winkelbereich abdeckende Radarsensoren (2) verwendet werden und/oder die Radarsensoren (2) eine Reichweite von wenigstens 30 Metern aufweisen und/oder zur Erfassung von Winkeln in zwei zueinander senkrechten Ebenen und/oder als Weitwinkel-Radarsensoren (2) ausgebildet sind.

9. Verfahren nach einem der vorangehenden Ansprüche,
**dadurch gekennzeichnet,**
**dass** als Radarsensor (2) ein einen den Radartransceiver (13) realisierenden Halbleiterchip (10), insbesondere CMOS-Chip, aufweisender Radarsensor (2) verwendet wird.

10. Verfahren nach Anspruch 9,
**dadurch gekennzeichnet,**
**dass** durch den Halbleiterchip (10) auch eine digitale Signalverarbeitungskomponente (14) des Radarsensors (2) und/oder eine Steuereinheit (15) des Radarsensors (2) realisiert werden und/oder der Halbleiterchip (10) und eine Antennenanordnung (11) des Radarsensors (2) als ein Package (12) realisiert sind.

11. Verfahren nach einem der vorangehenden Ansprüche,
**dadurch gekennzeichnet,**
**dass** der Radarsensor (2) in einem Frequenzbereich von 77 bis 81 GHz und/oder mit einer Frequenzbandbreite von wenigstens 1 GHz, insbesondere von 4 GHz, betrieben wird.

12. Kraftfahrzeug (1), aufweisend wenigstens einen Radarsensor (2) und ein zur Durchführung eines Verfahrens nach einem der vorangehenden Ansprüche ausgebildetes Steuergerät (7).

## Claims

1. Method for determining traffic density information in a motor vehicle (1) which is to be taken into account in a function of a vehicle system and describes the traffic density in the vicinity of the motor vehicle (1), wherein radar data describing objects (17) in the vicinity of the motor vehicle (2) is recorded by means of at least one radar sensor (2) directed at the vicinity of the motor vehicle (1),
**characterised in**
**that** a radar sensor (2) based on semiconductor technology is used, wherein an environment map containing the detected objects (17) classified into static and dynamic objects (17) is determined by evaluating the radar data, and local traffic density information is determined from at least some of the positions of dynamic objects (17) contained in the environment map, wherein the position of at least one cluster region (18) of dynamic objects (17) in which a threshold value for the density of dynamic objects (17) is exceeded is determined as local traffic density information.

2. Method according to claim 1,
**characterised in**
**that** at least one association algorithm assigning reflection points to objects (17) belonging together and/or a classification algorithm classifying an object (17) as dynamic or static is used to determine the environment map.

3. Method according to claim 1 or 2,
**characterised in**
**that** overall traffic density information covering the entire area is additionally determined.

4. Method according to any one of the preceding claims,
**characterised in**
**that** as a function of the traffic density information, at least one measure criterion relating to the implementation of a measure within the function, in particular a threshold value used in the measure criterion, is adapted.

5. Method according to any one of the preceding claims,
**characterised in**
**that** in a driver assistance system as a vehicle system which monitors the driver's attention, in particular their fatigue, a warning threshold for the issuance of a warning message to the driver with traffic density information indicating higher traffic densities is lowered and/or a fatigue parameter to be compared with the threshold value is raised with traffic density information indicating higher traffic densities.

6. Method according to claim 5,
**characterised in**
**that** an accumulated stress value describing the driver's stress for the current journey and/or a journey section driven since the last break is derived from the temporal course of the traffic density information, wherein with increasing stress value the warning threshold is lowered and/or the fatigue level is increased.

7. Method according to any one of the preceding claims,
**characterised in**
**that** the traffic density information is taken into account in at least one driving situation analysis carried out as part of the function.

8. Method according to any one of the preceding claims,
**characterised in**
**that** several radar sensors (2) covering the environment of the motor vehicle (1) in a complete 360° angle range are used and/or the radar sensors (2) have a range of at least 30 metres and/or are configured to detect angles in two planes perpendicular to each other and/or are configured as wide-angle radar sensors (2).

9. Method according to any one of the preceding claims,
**characterised in**
**that** a radar sensor (2) having a semiconductor chip (10), in particular a CMOS chip, realising the radar transceiver (13) is used as the radar sensor (2).

10. Method according to claim 9,
**characterised in**
**that** a digital signal processing component (14) of the radar sensor (2) and/or a control unit (15) of the radar sensor (2) are also realized by the semiconductor chip (10) and/or the semiconductor chip (10) and an antenna arrangement (11) of the radar sensor (2) are realized as a package (12).

11. Method according to any one of the preceding claims,
**characterised in**
**that** the radar sensor (2) is operated in a frequency range of from 77 to 81 GHz and/or with a frequency bandwidth of at least 1 GHz, in particular of 4 GHz.

12. Motor vehicle (1) having at least one radar sensor (2) and a control unit (7) designed to carry out a method according to any one of the preceding claims.

## Revendications

1. Procédé de détermination d'une information de densité de trafic devant être prise en compte dans une fonction d'un système de véhicule automobile, décrivant la densité de trafic dans l'environnement du véhicule automobile (1) dans un véhicule automobile (1), dans lequel des données de radar décrivant des objets (17) dans l'environnement du véhicule automobile (2) sont enregistrées au moyen d'au moins un capteur radar (2) dirigé sur l'environnement du véhicule automobile (1),
**caractérisé en ce que**
un capteur radar (2) basé sur la technologie des semi-conducteurs est utilisé, dans lequel l'analyse des données radar permet de déterminer une carte d'environnement contenant des objets détectés (17) classifiés en objets statiques et dynamiques (17) et une information de densité de trafic locale est déterminée à partir d'au moins une partie des positions des objets dynamiques (17) contenues dans la carte d'environnement, la position d'au moins d'une plage de fréquences (18) des objets dynamiques (17), dans laquelle une valeur de seuil est dépassée pour la densité des objets dynamiques (17), étant déterminée en tant qu'information de densité de trafic locale.

2. Procédé selon la revendication 1,
**caractérisé en ce que**
au moins un algorithme d'association qui associe des points de réflexion à des objets connexes (17) et/ou un algorithme de classification qui classifie un objet (17) comme statique ou dynamique est utilisé pour déterminer la carte d'environnement.

3. Procédé selon la revendication 1 ou 2,
**caractérisé en ce que**
une information de densité de trafic globale concernant tout l'environnement est déterminée en sus.

4. Procédé selon l'une des revendications précédentes,
**caractérisé en ce que**
au moins un critère de mesure concernant la réalisation d'une mesure dans le cadre de la fonction, en particulier une valeur de seuil utilisée dans le critère de mesure, est adapté en fonction de l'information de densité de trafic.

5. Procédé selon l'une des revendications précédentes,
**caractérisé en ce que**
dans le cas d'un système d'assistance au conducteur surveillant l'attention du conducteur, en particulier sa fatigue, en tant que système de véhicule, un seuil d'avertissement en vue d'émettre une information d'avertissement au conducteur avec des informations de densité de trafic affichant des densités de trafic supérieures est abaissé et/ou une variable de fatigue devant être comparée à la valeur de seuil avec des informations de densité de trafic affichant des densités de trafic supérieures est augmentée.

6. Procédé selon la revendication 5,
**caractérisé en ce que**
une valeur de charge accumulée décrivant la charge du conducteur pour le parcours actuel et/ou un tronçon de parcours réalisé depuis le dernier arrêt est dérivée du profil temporel de l'information de densité de trafic, le seuil d'avertissement étant abaissé et/ou la variable de fatigue étant augmentée au fur et à mesure que la valeur de charge augmente.

7. Procédé selon l'une des revendications précédentes,
**caractérisé en ce que**
l'information de densité de trafic est prise en compte pour au moins une analyse de situation de conduite réalisée dans le cadre de la fonction.

8. Procédé selon l'une des revendications précédentes,
**caractérisé en ce que**
plusieurs capteurs radars (2) couvrant l'environnement du véhicule automobile (1) dans une plage angulaire complète de 360° sont utilisés et/ou les capteurs radars (2) présentent une portée d'au moins 30 mètres et/ou sont conçus pour détecter des angles dans deux plans perpendiculaires l'un à l'autre et/ou comme des capteurs radars grand-angle (2).

9. Procédé selon l'une des revendications précédentes,
**caractérisé en ce que**
un capteur radar (2) comportant une puce semi-conductrice (10), en particulier une puce CMOS, réalisant l'émetteur-récepteur radar (13), est utilisé en tant que capteur radar (2).

10. Procédé selon la revendication 9,
**caractérisé en ce que**
un composant de traitement de signal numérique (14) du capteur radar (2) et/ou une unité de commande (15) du capteur radar (2) sont également mis en œuvre par la puce semi-conductrice (10) et/ou la puce semi-conductrice (10) et un ensemble d'antennes (11) du capteur radar (2) sont mis en œuvre sous la forme d'un boîtier (12).

11. Procédé selon l'une des revendications précédentes,
**caractérisé en ce que**
le capteur radar (2) fonctionne dans une bande de fréquences de 77 à 81 GHz et/ou avec une largeur de bande de fréquences d'au moins 1 GHz, en particulier de 4 GHz.

12. Véhicule automobile (1), comprenant au moins un capteur radar (2) et un appareil de commande (7) conçu pour la réalisation d'un procédé selon l'une des revendications précédentes.
